# FASCICULE DE BREVET EUROPEEN

(11) **EP 0 840 921 B1**
(45) Date de publication et mention de la délivrance du brevet: **30.06.1999**
(21) Numéro de dépôt: 96926430.8
(22) Date de dépôt: 19.07.1996
(51) Int. Cl.: G09B 9/00

(54) **INSTALLATION PEDAGOGIQUE POUR L'APPRENTISSAGE ET L'ENTRAINEMENT A L'UTILISATION DE MOYENS D'INTERVENTION CONTRE UN INCENDIE**
LEHRGERÄT ZUM ERLERNEN UND ÜBEN DES GEBRAUCHS VON FEUERLÖSCHANLAGEN
TEACHING APPARATUS FOR LEARNING AND PRACTISING THE USE OF FIRE-FIGHTING EQUIPMENT

(30) Priorité: 21.07.1995 FR 9509124
(43) Date de publication de la demande: 13.05.1998
(73) Titulaire: Technique-Pédagogie-Sécurité Equipements, 56130 La Roche-Bernard (FR)
(72) Inventeur: DESHOUX, Thierry, F-44410 Herbignac (FR); JAUNASSE, Jacques, F-56130 Nivillac (FR); SEIGNARD, Marcel, F-56190 Arzal (FR)
(74) Mandataire: Le Faou, Daniel
(86) Numéro de dépôt international: FR9601138
(87) Numéro de publication internationale: WO9704432

(56) Documents cités:
- FR-A- 2 310 602
- FR-A- 2 714 197
- US-A- 4 526 548
- US-A- 4 742 356
- US-A- 4 861 270
- US-A- 4 948 371
- US-A- 5 059 124

## Description

La présente invention concerne une installation pédagogique pour l'apprentissage et l'entraînement de personnes à l'utilisation de moyens d'intervention contre un incendie.

Des installations simulant des incendies ont déjà été proposées.

Ainsi, le document EP-B-0 146 465 concerne un installation mobile (montée sur camion), comportant un caisson d'exercice dans lequel se trouvent des moyens capables de mettre les personnes à former ou à entraîner en condition réelle d'exercice. Ces moyens consistent notamment en des cheminements sur lesquels sont placés des bacs contenant un combustible inflammable, une rampe de gaz inflammable et une armoire électrique susceptible d'être embrasée. L'installation est équipée d'une salle de contrôle et d'observation.

Ce genre d'installation donne toute satisfaction, tant pour former des personnes spécialisées que pour entraîner du personnel déjà averti, par exemple des pompiers professionnels, car elle reproduit des conditions de sinistre par le feu qui sont très proches des conditions réelles.

Cependant, elle est conçue pour des interventions nécessitant des moyens importants d'intervention incendie, et non pour la formation spécifique à la manipulation des extincteurs, dans le cadre d'un tout début d'incendie.

Il a été proposé par ailleurs des systèmes de simulation qui mettent en oeuvre non pas des feux réels, mais des scènes d'incendie préalablement filmées, sous forme d'images projetées sur un écran se trouvant devant la personne à former ou à entraîner.

Un tel système est connu par exemple du document FR-A-2 310 602.

Les images sont projetées sur l'écran par un projecteur de cinéma, et des moyens pilotés par un calculateur électronique permettent, dans une certaine mesure, de faire évoluer la scène d'incendie.

La personne qui pratique l'exercice est munie d'un extincteur à gaz carbonique (CO2), et elle projette réellement du gaz carbonique sur les images, c'est-à-dire sur l'écran. Ce dernier est équipé d'une série de capteurs qui, en fonction de la tension de l'écran, permettent de localiser la zone d'impact du CO2 sur l'écran, et d'envoyer au calculateur une information correspondante, laquelle va modifier l'évolution des images d'incendie visibles sur l'écran, dans l'hypothèse où la manipulation d'extinction pratiquée par la personne n'est pas conforme à une séquence prédéterminée.

Ce système connu, dans lequel il est déjà prévu une certaine interactivité entre le comportement de la personne affectée à l'extinction du feu et l'évolution de l'incendie, présente l'inconvénient de consommer du gaz carbonique, et de nécessiter des moyens de stockage et d'approvisionnement de ce gaz.

Un autre inconvénient de ce système connu résulte du fait que le message donné par le capteur est fonction de la tension de l'écran, ce qui est assez aléatoire car il dépend non seulement de la position du point d'impact, mais aussi de la distance de l'opérateur par rapport à l'écran ; il n'est donc pas possible de localiser avec précision et de manière sûre la zone d'impact.

Enfin, la projection d'images cinématographiques ne permet pas une réelle et complète interactivité, ni une réponse rapide avec multiplicité d'évolution des différentes scènes d'incendie projetées.

Le document US-A-5 059 124 a pour objet un appareil de simulation pour l'entraînement à la lutte contre un incendie.

Cet appareil comporte un moniteur TV (écran de télévision) auquel est associé un ordinateur adapté pour afficher sur l'écran des images représentant un incendie. La personne effectuant l'exercice est équipée d'un extincteur factice (modifié) émettant un rayon infrarouge représentatif de la direction du jet virtuel de l'engin ; des capteurs disposés à la périphérie de l'écran sont adaptés pour localiser la zone d'impact. Des moyens de détection ultrasonique permettent de déterminer également la distance de la tête de diffusion de l'extincteur modifié par rapport à l'écran. Ces informations sont transmises à l'ordinateur, qui fait évoluer les images d'incendie en conséquence. Ainsi, si la manipulation de l'extincteur est correctement réalisée, l'incendie va s'éteindre. Au contraire, si la manipulation est mauvaise, il va se poursuivre, voire s'amplifier.

Cet appareil connu présente deux inconvénients majeurs.

En premier lieu, l'écran possède une dimension réduite, lié à sa nature (tube cathodique). Il n'est donc pas possible d'y afficher un feu ordinaire à sa taille réelle, de sorte que les amplitudes de déplacement et de manipulation que la personne doit mettre en oeuvre sont complètement faussées, n'étant pas représentatives d'une situation réelle.

En second lieu, la seule intervention exigée à la personne est de faire usage d'un extincteur. On ne lui demande pas d'avoir une démarche globale, si bien que l'intérêt de cet appareil connu est relativement limité sur le plan pédagogique.

A cet égard, il faut noter que, lorsqu'on se trouve confronté à un début d'incendie, il est souvent essentiel de procéder à certaines interventions préalables, avant même d'attaquer l'incendie lui-même à l'aide d'un appareil d'extinction. C'est ainsi, par exemple, que pour un feu dans une armoire électrique, la première démarche sera de couper le courant.

A défaut, la procédure d'extinction sera inefficace.

L'installation qui fait l'objet de la présente invention comprend, comme l'appareil décrit dans le document US-A-5 059 124 :
- un écran devant lequel doit se placer la personne accomplissant l'exercice ;
- des moyens pour afficher sur cet écran des images évolutives représentatives d'un incendie suivant un séquencement piloté par un ordinateur ;
- au moins un appareil d'extinction modifié, incapable de propulser un agent extincteur, mais équipé de moyens générateurs d'un signal représentatif de la direction de son jet virtuel ;
- des moyens de localisation de la zone virtuelle d'impact de l'appareil sur l'écran, adaptés pour transmettre à l'ordinateur une information correspondante, afin de faire évoluer en conséquence les images affichées ;

Conformément à l'invention :
a) d'une part, ledit écran est de grande dimension, les images affichées sur celui-ci étant à la même échelle, ou sensiblement à la même échelle, que les scènes réelles de l'incendie qu'elles représentent ;
b) d'autre part, l'installation comporte :
   - au moins un appareil annexe représentatif d'un moyen dit influent, susceptible d'être amené dans au moins deux états différents, et dont le changement d'état peut avoir une influence sur l'évolution de l'incendie, cet appareil annexe étant adapté pour être actionné aussi par la personne accomplissant l'exercice, des moyens de repérage de l'état dudit appareil annexe étant prévus qui sont adaptés pour transmettre à l'ordinateur une information correspondante, afin, le cas échéant, de faire évoluer en conséquence les images affichées ;
   - plusieurs appareils d'extinction modifiés de type différent, susceptibles d'être prélevés sélectivement par la personne, des contacteurs associés à chacun desdits appareils étant adaptés pour fournir à l'ordinateur des informations sur l'identité et sur l'état de l'appareil prélevé.

Pour le bon déroulement de l'opération, il est essentiel en effet que le type d'extincteur (c'est-à-dire la nature de l'agent extincteur qu'il est censé propulser) soit adapté au type de feu auquel on a affaire.

Grâce à ces dispositions, les inconvénients mentionnés plus haut sont éliminés.

Par ailleurs, selon un certain nombre de caractéristiques avantageuses possibles, non limitatives, de l'invention :
- l'installation comporte un vidéoprojecteur, piloté par l'ordinateur, et projetant les images sur l'écran ;
- la surface d'écran est translucide, ledit vidéoprojecteur étant placé derrière l'écran, et travaillant en projection inverse.

Dans un mode de réalisation préféré, la localisation de la zone d'impact est réalisée par un système de détection électro-magnétique, l'appareil d'extinction modifié étant équipé de cellules émettnces disposées dans l'axe de visée de l'appareil, tandis que des capteurs de champ magnétique fixes sont répartis dans la zone d'exercice, ce système détectant également la distance et l'angle d'attaque de l'appareil d'extinction par rapport à l'écran.

La distance et l'orientation du jet sont en effet des paramètres très importants pour ce qui est de l'efficacité de l'intervention.

Dans un autre mode de réalisation possible, cette localisation est réalisée au moyen d'un faisceau lumineux, par exemple infrarouge, émis par un pointeur laser équipant l'appareil d'extinction modifié, et d'un capteur optique apte à localiser la zone d'impact du faisceau sur la surface d'écran.

Dans ce cas, de préférence, ledit pointeur laser émet un rayon intermittent, sous forme d'impulsions, le capteur optique étant adapté pour analyser la durée desdites impulsions, et transmettre à l'ordinateur une information correspondante.

Avantageusement, ledit appareil annexe est représentatif d'un moyen influent choisi parmi les dispositifs suivants :
- une alarme,
- un brise-glace,
- un téléphone,
- un tableau électrique,
- un compteur gaz,
- une manette de coupure d'oxygène,
- une manette d'arrêt de machine,
- une prise de courant,
- une commande de gaz d'extincteur,
- un tiré-lâché.

De préférence, enfin, l'installation comporte des moyens générateurs de flash lumineux, de sons, de fumées froides et/ou d'odeurs, pilotés ou non par l'ordinateur.

D'autres caractéristiques et avantages de l'invention apparaîtront de la description et des dessins annexés, qui représentent des modes de réalisation possibles de l'installation.

La figure 1 est une vue générale en perspective, d'un premier mode de réalisation.

La figure 2 est une illustration d'une architecture matérielle possible de l'installation.

La figure 3 est une vue générale simplifiée, analogue à la figure 1, montrant un second mode de réalisation.

Les figures 4 et 6 sont des tableaux représentant deux synoptiques d'enchaînement des clips, dans deux exemples d'incendie différents, à savoir un feu transmis par meulage, et un feu de cartons (respectivement).

La figure 5 est une illustration de l'architecture logicielle de l'unité de traitement informatique pilotant l'installation.

Les figures 7 et 8 sont des représentations en langage informatique d'un script de scénario et d'un script des clips (respectivement).

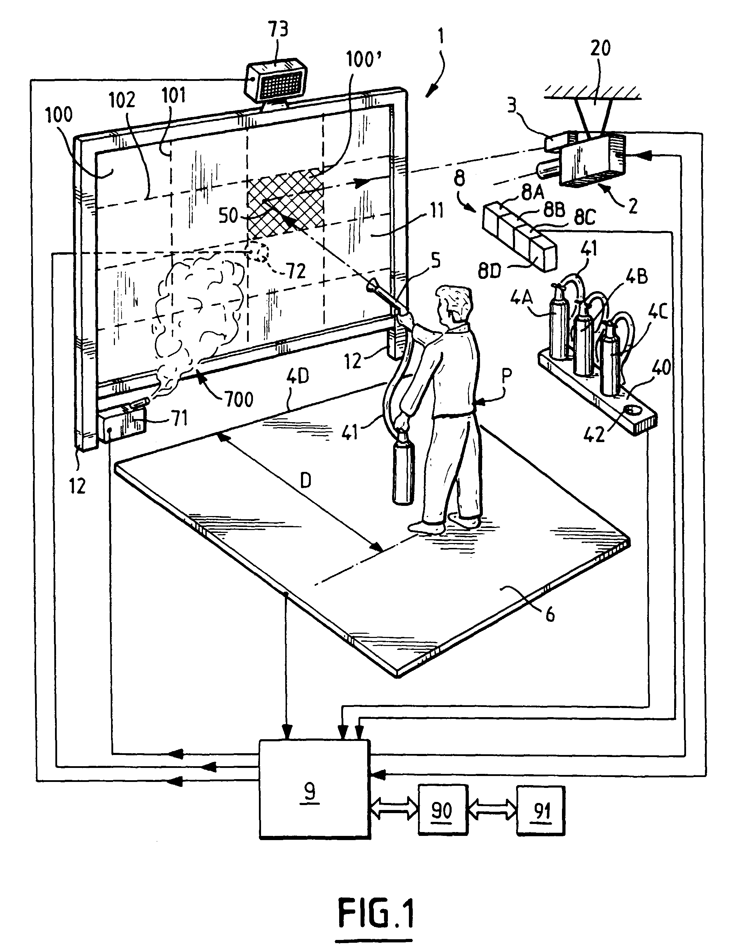

Sur la figure 1, on a représenté schématiquement l'ensemble de l'installation au cours d'un exercice de formation et/ou d'entraînement par une personne désignée **P**.

Le système comprend un écran de grande taille 1, disposé verticalement, composé d'un cadre 10 rectangulaire, d'une toile tendue 11 apte à afficher les images projetées, et de pieds 12 de support ou de fixation au sol.

A titre indicatif, les côtés de l'écran ont une dimension de l'ordre de 1,5 m à 3 m, voire plus.

Devant l'écran est placé un projecteur 2 porté par un support approprié 20, par exemple fixé au plafond.

Il s'agit d'un projecteur vidéo de type connu, par exemple du type DP 2 800 ou PRAO BROADCAST de la société INTELWARE, qui assure une projection de type analogique, avec une excellente qualité d'images.

Sur le projecteur 2 est monté un capteur 3 qui, comme on le verra plus en détail plus loin, a pour fonction de détecter la position d'un point infrarouge sur l'écran.

Devant l'écran 1, sur l'un des côtés de celui-ci, est disposé un socle 40 présentant une série de logements 42 dans lesquels il est possible de mettre en place, de manière amovible, une série d'extincteurs instrumentés, appelés dans la présente description et dans les revendications qui suivent "appareils d'intervention".

Ceux-ci sont par exemple au nombre de quatre, référencés 4A, 4B, 4C et 4D.

Les trois premiers sont en place sur le socle, tandis que le dernier - 4D - a été prélevé et est utilisé par la personne **P** en cours de formation.

Il s'agit d'extincteurs du commerce, qui ont été modifiés comme cela sera expliqué plus loin.

Ils sont incapables de projeter physiquement un agent d'extinction, mais possèdent des moyens de simulation du jet d'un tel agent.

Chaque extincteur est d'un type différent.

Ainsi, par exemple, l'un d'entre eux est du type censé projeter de l'eau pulvérisé, ce qui est adapté à des feux dits de classe A, qui concernent des produits solides du genre bois, papier, carton, etc.

Un autre extincteur est par exemple du type censé projeter une poudre polyvalente, adaptée aux feux de la classe A, de la classe B (liquides), voire de la classe C (gaz).

Un autre extincteur est censé projeter du CO₂, adapté aux feux d'origine électrique.

Enfin, le quatrième appareil peut consister en un robinet d'incendie armé, couramment désigné dans la profession par RIA, utilisé surtout pour des feux de classe A d'une certaine importance, ou en un autre type de matériel d'intervention.

Le culot de chacun des appareils est muni d'un contacteur électrique qui s'enclenche dans une fiche complémentaire ménagée dans le socle, l'ensemble formant contact, ce qui permet en permanence via un circuit électronique approprié, de savoir si l'un des appareils a été ôté de son socle, et de connaître son identité.

Le système de détection du choix d'extincteur est basé sur l'utilisation d'une carte d'entrées analogiques "tout ou rien" reliée aux interrupteurs. Il s'agit, par exemple, d'une carte modèle ML8P ou 16ISO de la société INDUSTRIAL COMPUTER SOURCE.

Chaque appareil 4, dépourvu de toute substance extinctrice, est muni d'un levier de percussion traditionnel, avec verrou de sécurité, et d'un tube flexible 41, dont l'embout 5 consiste non pas en une lance de projection du produit d'extinction, mais en un pointeur laser, apte à émettre un faisceau lumineux laser, infrarouge et intermittent, c'est-à-dire sous forme d'impulsions.

A titre indicatif, la puissance du rayon est de 1mW et la fréquence des impulsions de 25 par seconde.

A l'intérieur de la bouteille constituant l'appareil, sont logées les batteries (de 6 ou 12V par exemple), un multivibrateur générant les impulsions, ainsi que le circuit de commande du pointeur, les connections électriques passant dans le tube flexible 41.

Des contacteurs appropriés permettent de détecter l'actionnement du levier de percussion et de la gâchette, le circuit de commande assurant la mise sous tension du pointeur seulement si l'opérateur a successivement enlevé le verrou, actionné le percutateur, et appuyé sur la gâchette.

Le pointeur 5 en forme de lance est muni d'une gâchette similaire à celle équipant les extincteurs, et qui constitue un interrupteur dont l'actionnement commande l'émission d'un rayon infrarouge 50, tandis que son relâchement en provoque l'arrêt.

Le pointeur laser 5 ainsi que le capteur optique 3 sont les éléments constitutifs d'un système interactif de présentation du genre commercialisé sous la marque CYCLOPE CYC 1000 par la société américaine PROXIMA CORPORATION, ce système étant décrit dans le document US-A-5 181 015 notamment.

Le rayon laser 50 émis par le pointeur 5 va être localisé par les capteurs 3 et transmis à l'ordinateur associé à celui-ci comme une instruction souris.

Du fait qu'il s'agit d'un rayon infrarouge, il n'est pas visible par la personne **P**, et n'interfère donc pas visuellement avec les images provenant du projecteur 2.

Le système fonctionne avec un quadrillage d'écran préalable, invisible à l'oeil nu, composé de lignes horizontales 102 et de lignes verticales 101, qui divisent la surface d'écran 11 en un certain nombre de secteurs rectangulaires 100. Il s'agit d'un calibrage fournissant au capteur les coordonnées du faisceau laser sur l'écran, comme des coordonnées souris. Le capteur 3 est capable de déceler à tout instant le secteur 100' dans lequel se produit l'impact du rayon laser 50 sur la surface 11, et d'adresser une information sur l'identité de ce secteur à l'ordinateur qui pilote le système.

Cette installation est équipée d'un ensemble 8 d'appareils dits annexes, par exemple au nombre de quatre, référencés 8A, 8B, 8C et 8D, représentés schématiquement sous forme de blocs sur la figure 1.

Ce sont des appareils représentatifs chacun d'un moyen dit influent, susceptible d'être amené dans au moins deux états différents, et dont le changement d'état peut avoir une influence sur l'évolution d'un incendie venant de se déclarer.

L'ensemble des appareils 8 est directement accessible à la personne **P**, ces appareils étant par exemple installés contre une cloison latérale du local d'exercice.

A titre d'exemples:
- 8A est une fenêtre susceptible d'être ouverte ou fermée ;
- 8B est un compteur électrique muni d'un levier de coupure du courant ;
- 8C est une vanne de coupure de gaz ;
- 8D est un système de déclenchement d'alerte, par exemple un téléphone.

A chaque appareil est associé un capteur, par exemple du genre interrupteur, apte à émettre un signal représentatif de son état : "ouverte" ou "fermée" (fenêtre) ; courant coupé ou non coupé (compteur), etc.

Le système de déclenchement d'alerte peut être éventuellement relié à la régie, où une personne chargée de la formation peut enregistrer un message et prendre des mesures en conséquence.

Ces différents capteurs sont connectés à l'ordinateur qui pilote l'installation.

Devant l'écran, et posé au sol, se trouve un tapis 6 sur lequel se trouve et se déplace la personne **P** chargée de l'exercice.

Il s'agit d'un tapis-contact tramé, apte à générer des signaux électriques lorsqu'il est chargé, ces signaux dépendant de l'emplacement de la charge, par suite d'une modification localisée de sa résistance électrique. En l'occurrence, le tapis-contact est choisi pour fournir un signal représentatif, par exemple proportionnel, à la distance **D** de la personne **P** par rapport au bord avant du tapis (qui correspond sensiblement au niveau de l'écran).

Ce tapis est, par exemple, du genre couramment utilisé pour les contrôles d'accès à l'entrée d'un local.

Au voisinage de l'écran, est placé un générateur de fumées froides 71, par exemple situé près de l'un des pieds 12, un haut-parleur 73, par exemple fixé en partie supérieure de l'écran, et un spot 72 apte à produire des flashs lumineux (éclairs), situé derrière l'écran, étant supposé que la surface de celui-ci est translucide.

Le générateur de fumées est du genre utilisé dans les installations scéniques.

Ce système est géré par un ordinateur 9 auquel est associé un disque dur 90, connecté à une banque d'images 91.

L'ordinateur est par exemple de type PC, modèle DX 2/66 ou PENTIUM avec disque dur de 1 Gigaoctets et mémoire vive de 16 Megaoctets.

L'ordinateur est connecté par des câbles électriques au projecteur 2, au capteur 3, au socle 4, au tapis 6, aux appareils muraux 8, et aux accessoires 71, 72 et 73. Ces liaisons sont symbolisées par des lignes à la figure 1.

Au niveau du PC 9, sont prévus une carte de décompression qui reçoit les données vidéo du disque dur 90 et les décompresse en temps réel, une carte multi-média (carte d'incrustation) qui reçoit les données d'affichage issues du PC et les images vidéo décompressées, pour les projeter sur l'écran via le projecteur vidéo 2, ainsi qu'une carte d'exploitation du capteur 3, des capteurs associés aux appareils 8, et des contacteurs du socle 40.

La banque de données d'images contient un certain de nombre de scènes d'incendie d'origines variées, notamment de bureau ou domestique, par exemple, feu de friteuse, feu dans corbeille à papier, feu dans moteur de voiture, feu dans armoire électrique, etc.

Chaque type de scène a fait l'objet de séquences différentes, selon que le feu a été correctement éteint, selon qu'il a été incorrectement traité, et selon qu'il n'a pas été traité, c'est-à-dire qu'il a évolué naturellement,

L'ensemble de ces familles d'images est stocké sur le disque dur 90, et va être restitué sur l'écran via le projecteur 2, selon un séquencement qui va être défini par l'ordinateur, au moyen d'un logiciel spécifique, en fonction du comportement de la personne **P**.

Les films vidéo sont encodés selon la norme de codage appelée "MJPEG" qui permet un affichage de grande taille sans dégradation d'image.

La décompression des séquences MJPEG peut être réalisée par les cartes suivantes :
- FPS60 ou AVMASTER de la société FAST ;
- DC20 de la société MIRO.

En début d'opération l'ensemble des appareils 4A à 4D se trouvent placés sur le socle récepteur 40.

La personne chargée de la formation, qui est installée au clavier de l'ordinateur, sélectionne un type d'incendie, et envoie les images correspondantes, lesquelles se trouvent projetées sur l'écran.

Les images sont sensiblement à l'échelle 1, ce qui est possible grâce à la taille importante de l'écran.

Le stagiaire **P** doit tout d'abord effectuer une intervention sur l'un, ou plusieurs, des appareils 8A, 8B, 8C, 8D.

C'est ainsi, par exemple, que pour un feu d'origine électrique, il doit commencer par couper le courant.

Pour un feu de mobilier, il doit commencer par fermer la fenêtre (pour empêcher l'arrivée d'air frais, susceptible d'activer les flammes).

Dans tous les cas, il devra donner l'alerte.

L'ordinateur tiendra compte du fait que ces démarches préalables ont (ou n'ont pas) été effectuées dans sa sélection d'images pour faire évoluer les scènes d'incendie.

Ensuite, le stagiaire doit faire le choix de l'appareil qu'il va utiliser en fonction de la catégorie de feu à laquelle il a affaire.

Ayant saisi l'un des appareils, en l'occurrence 4D sur la figure, il se place devant l'écran - à bonne distance de celui-ci -, enlève le verrou de sécurité, percute, actionne la gâchette, et vise avec son pointeur 5 les zones du sinistre, en fait de l'écran, qu'il lui semble nécessaire d'attaquer prioritairement.

L'ordinateur est bien sûr renseigné sur l'identité de l'appareil utilisé, par une information venant du contacteur situé sur le socle 4 ; il connaît l'ordre logique de mise en fonctionnement de l'appareil d'intervention ; enfin, il est renseigné en permanence sur la zone d'impact 100' et sur la distance qui sépare la personne de l'écran.

De plus, à chaque type d'appareil est affecté un temps de vidage théorique, durée moyenne pour vider l'appareil de son produit. Ce temps est rentré comme paramètre dans l'ordinateur, la mesure du nombre total d'impulsions du rayon émis lui permettant de déterminer le moment où ce temps est atteint et où l'appareil est donc supposé avoir été vidé.

A partir des données, il va sélectionner dans le disque dur 90, les images appropriées pour faire évoluer en conséquence l'incendie, soit dans le sens d'une extinction, soit au contraire dans le sens d'une aggravation.

Tant que la percussion n'a pas été faire et la gâchette actionnée, le feu évolue de manière défavorable ce qui se traduit par la projection d'images modifiées - différentes de la séquence "standard" (correspondant à une action correcte) -.

Ensuite, tant que le feu n'a pas été éteint, l'opération va se dérouler avec projection d'images standard ou modifiées selon que le maniement de l'appareil est correct ou non. Bien entendu, lorsque l'appareil est vide (durée totale d'utilisation ayant atteint un seuil donné) les images sont modifiées, l'évolution étant défavorable.

L'évolution dépend aussi de l'actionnement éventuel des différents appareils annexes 8.

L'ordinateur va également, le cas échéant, piloter le générateur 71, afin de générer des fumées froides 700 (non toxiques), ainsi que le haut-parleur 73, pour produire des bruits représentatifs de l'incendie. Ce haut-parleur 73 peut également être utilisé par la personne chargée de la formation pour adresser des messages aux stagiaires.

Dans certains cas, il est également possible de produire des flashs au moyen du spot 72, ces flashs constituant des moyens complémentaires d'illustration d'une situation d'incendie. De même, le générateur de fumées froides et le spot peuvent aussi - de préférence - être actionnés spontanément (hors pilotage de l'ordinateur) par l'opérateur, lorsqu'il estime la situation opportune.

Dans l'hypothèse où la personne pratiquant l'exercice a donné l'alerte au début, par exemple en téléphonant aux pompiers, des images représentant l'arrivée des secours et leur intervention peuvent être affichées au bout d'un certain temps.

Le stagiaire est donc confronté a une situation très proche de celle d'un sinistre véritable.

Tous les paramètres relatifs aux actions du stagiaire au cours de l'exercice sont enregistrés par l'ordinateur, et peuvent ensuite être reproduits sur imprimante, en vue de l'élaboration d'une analyse de l'intervention.

Bien entendu, si le stagiaire cesse de presser la gâchette du pointeur laser, il n'y a pas d'émission de rayon lumineux 50, ni d'information transmise par le capteur 3. Dans ce cas, l'ordinateur considère qu'il n'y a pas d'action sur le sinistre, et celui-ci va évoluer de manière naturelle.

Un tel système peut être installé de manière fixe, à l'intérieur d'une salle, ou être monté sur véhicule, ce qui permet d'aller former le personnel à proximité de son lieu de travail.

Au lieu d'un vidéo projecteur, on peut utiliser un rétroprojecteur, par exemple, du type MO 1280/2 de la société INTELWARE, associé à un écran LCD TFT. Dans ce cas, il est cependant nécessaire de transformer en signaux numériques les signaux vidéo (analogiques).

Au lieu d'un tapis-contact, différents moyens assurant la même fonction, notamment des cellules opto-électroniques pourraient être prévus pour mesurer la distance de l'opérateur par rapport à l'écran.

Au lieu de déterminer le temps de mise en service de l'appareil par comptage des impulsions du rayon intermittent émis, on pourrait utiliser une horloge asservie à l'actionnement de la gâchette, le rayon pouvant alors être continu.

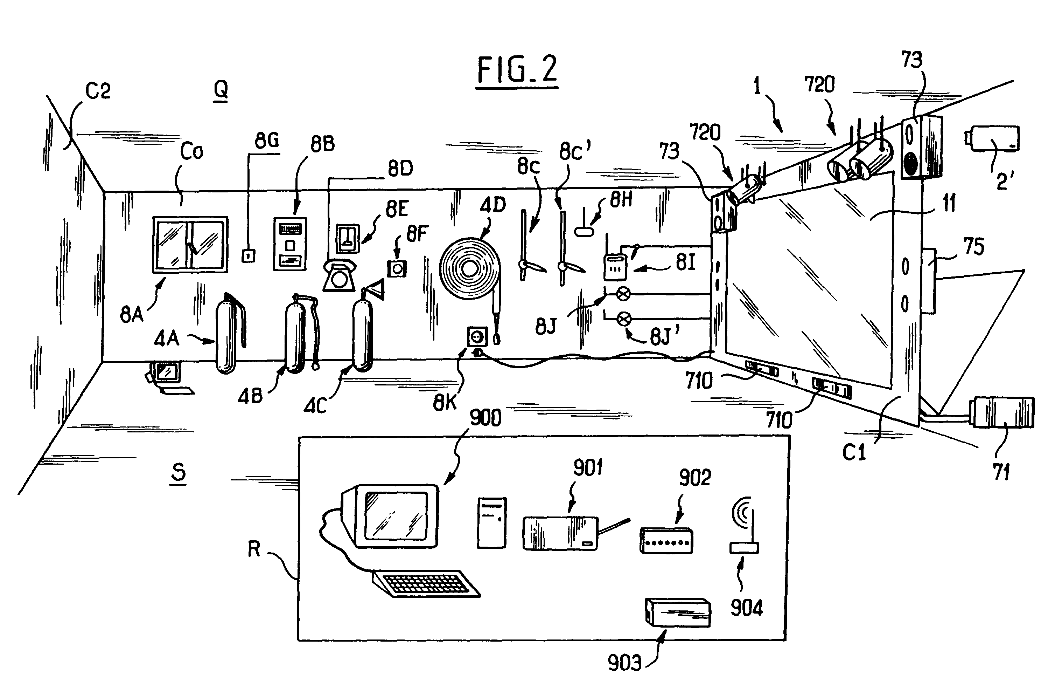

La figure 2 représente un local pouvant recevoir une installation conforme à l'invention, et équipé de manière exhaustive.

Le sol du local est référencé **S**, le plafond **Q**, la cloison avant (recevant l'écran) **C**_{**1**}, la cloison arrière **C**_{**2**}, et une cloison latérale **C**_{**0**}.

La régie, désignée **R**, peut être située dans une pièce à côté.

On reconnaît sur cette figure les différents appareils d'intervention instrumentés 4, en l'occurrence trois types d'extincteurs 4A, 4B, 4C, un R.I.A. 4D, ainsi que différents appareils annexes 8A à 8K.

Il s'agit, en l'occurrence, outre les appareils 8A, 8B, 8C et 8D déjà mentionnés, d'un brise-glace 8E, d'un poussoir d'arrêt d'urgence 8F, d'un interrupteur 8G, d'un système "tiré-lâché" 8H (commande de désenfumage), d'un compteur gaz 81, d'une paire de vannes de coupure d'arrivée de liquides 8J, 8J', d'une prise électrique 8K.

Il y a deux vannes de coupure de gaz 8C, 8C'.

Sur cette figure, le vidéo-projecteur, référencé 2', est placé derrière l'écran 1', et travaille en projection inverse, la surface d'écran 11 étant translucide.

On y reconnaît des haut-parleurs 73 et un système d'enfumage 71, placé aussi derrière l'écran. Celui-ci produit des fumées froides qui débouchent à la base de l'écran par des ouïes 710. En partie haute d'écran sont installés des spots lumineux 720 aptes à produire des jeux de lumière. La référence 75 désigne un diffuseur de substances odorantes, apte à émettre des odeurs en rapport avec la nature du sinistre (odeurs de gaz par exemple), pour accroître encore le réalisme de la simulation. Le diffuseur 75 peut être également piloté par l'ordinateur et/ou être commandé directement à partir de la régie.

A côté de la bande son stéréo des images vidéo projetées, on peut prévoir l'adjonction de sons numériques correspondant au maniement des moyens d'intervention (bruits d'extincteur, de fermeture des vannes, etc.) qui sont émis par les haut-parleurs 73.

En régie **R**, on reconnaît un moniteur et un clavier de contrôle 900, une imprimante 901, un système de traitement entrées/sorties 902, un système de localisation 903 et un récepteur HF 904.

Dans ce mode de réalisation, la connection entre les capteurs associés aux appareils d'extinction 4 et aux appareils annexes 8 est réalisée en effet par liaison radio, et non par liaison filaire.

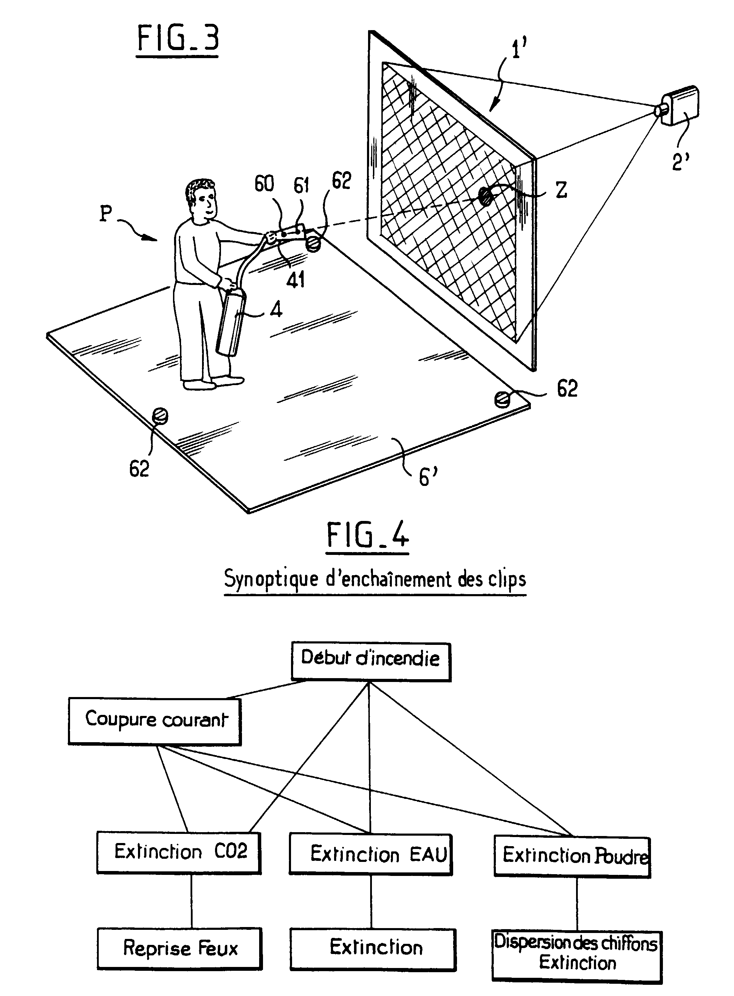

En référence à la figure 3, nous allons maintenant décrire un mode de réalisation de l'installation dans lequel la localisation de l'impact virtuel de l'appareil d'extinction sur l'écran 1, est réalisée par un système de détection électromagnétique.

Le système mis en oeuvre est de préférence le modèle commercialisé par la société américaine POLHEMUS sous la référence commerciale "FASTRACK". Le principe de fonctionnement du système, qui est décrit par exemple dans les documents EP-A-0 581 434 et EP-A-0 620 448, comprend un ensemble de générateurs de champ magnétique (émetteurs) associé à un ensemble de détecteurs de champ (capteurs), l'un des ensembles étant fixe, et l'autre mobile. Les mesures faites par les capteurs sont fonction de l'orientation et de la position relatives des deux ensembles. Le résultat des mesures, après calcul et traitement par ordinateur, permet de localiser avec précision, suivant six degrés de liberté, l'ensemble mobile par rapport à un système de coordonnées fixes.

Sur le dessin de la figure 3, l'appareil d'extinction instrumenté 4 est équipé de l'un des deux générateurs de champ électromagnétique 60, 61. Ceux-ci sont alignés sur la direction théorique (axe de visée) du jet, représenté en trait interrompu. Un ensemble de trois capteurs 62 est fixé au sol, suivant une disposition triangulaire, dont la position est déterminée en référence à l'écran 1'.

Lorsque l'appareil 4 est actionné par la personne **P**, les éléments 60, 61 créent des champs magnétiques dont la détection par les capteurs 62 fournit en temps réel à l'ordinateur la position des éléments 60, 61. Celui-ci calcule alors la position de la zone d'impact **Z** du jeu virtuel sur l'écran, l'angle d'attaque, et la distance d'attaque (distance de la tête diffuseuse par rapport à l'écran).

Ces paramètres sont pris en compte pour le pilotage des images d'incendie projetées par le vidéo-projecteur 2' sur l'écran 1'.

Ce projecteur est choisi pour ne pas dégrader la qualité d'une image vidéo dans un format standart (PAL par exemple). A titre d'exemple, on peut citer le modèle de projecteur diffusé sous la référence ASTROBEAM 800 x 600 LCD par la société DAVIS.

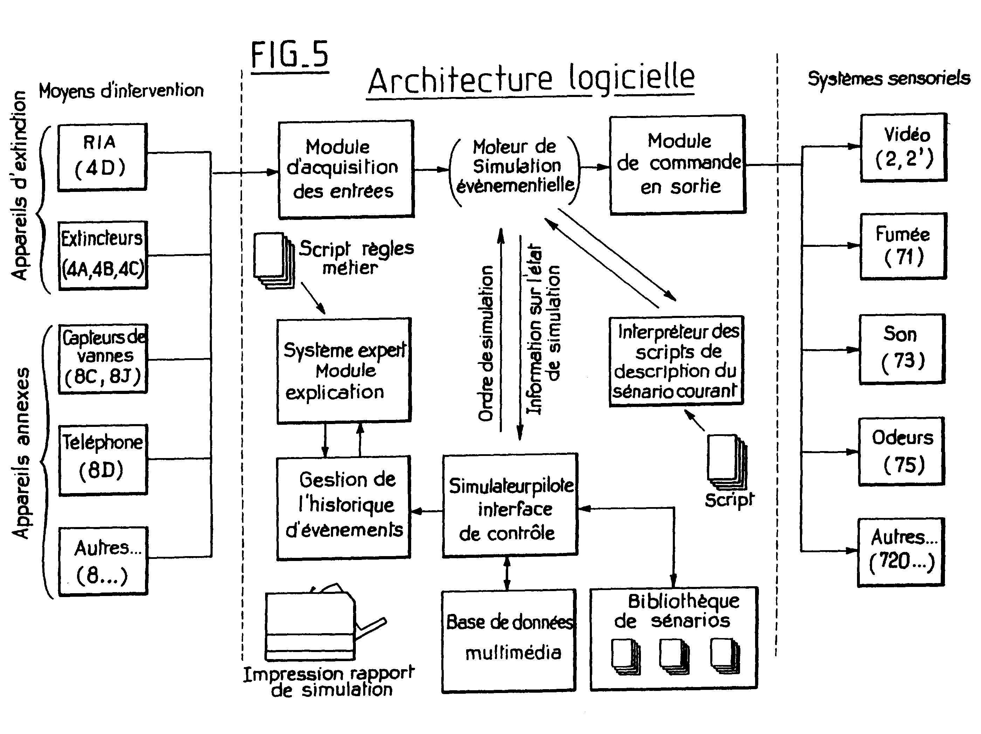

La figure 5, à laquelle on va maintenant se référer, représente l'architecture logicielle de l'unité de traitement informatique.

La dynamique du système repose sur un moteur de simulation à évènements discrets.

Celui-ci a la responsabilité du pilotage des dispositifs sensoriels : images vidéo, son, émission de lumières, fumées, odeurs, etc.

l'architecture logicielle est composée des éléments suivants :
- module de contrôle et de pilotage,
- interpréteur des scripts de description des scénarios et clips,
- moteur de simulation événementielle,
- module acquition des entrées,
- module de commande en sortie,
- base de données multimédia,
- gestion d'un historique d'événements,
- module d'explication.

Le module de contrôle et de pilotage est responsable de l'interface utilisateur, du changement des scénarios, des commandes de simulation, des impressions des rapports de simulation.

L'interpréteur des scripts interprète les faits, déclarations et commandes énoncés dans les scripts "scénario" et "clip". Toute la dynamique d'un scénario est décrite dans ces scripts.

Le moteur de simulation est un système multi-agents, responsable de la communication entre les agents, du transfert des événements vers les agents concernés, de l'envoi de commandes vers les systèmes sensoriels, des requêtes vers le module interpréteur de scénario.

Le module d'acquisition des entrées a pour fonction d'acquérir tout changement d'état des moyens d'intervention en temps réel.

Le module de commande en sortie est une interface de commande des différents systèmes sensoriels.

La base de données multimédia est un fichier dans lequel sont stockés les images et sons. A titre indicatif, ces données occupent un volume de l'ordre de 60 Mo par scénario.

Les événements significatifs transitant par le noyau de simulation sont mémorisés dans le module de gestion de l'historique d'événements pour être exploités par le module d'explication. Les informations mémorisées sont les actions de l'utilisateur, un détail des déroutements, les commandes des systèmes sensoriels.

Le module d'explication au terme d'une session de simulation, et par l'application de règles "métier" sur les faits que contient l'historique, génère un rapport d'explication du pourquoi de la situation finale, et propose un palliatif.

Ainsi, par exemple, pour un scénario du feu de bureau, on constate que l'incendie s'est propagé malgré l'apport d'un agent extincteur en quantité suffisante, en raison d'un fort courant d'air. Le palliatif consiste à fermer les arrivées d'air avant d'appliquer l'agent extincteur.

A titre d'exemple de scénario, nous allons maintenant analyser celui d'un feu transmis par meulage.

L'exercice s'adresse à une personne qui travaille dans un environnement industriel, par exemple un atelier de maintenance équipé d'un étau, d'une perceuse et d'un meule électrique.

Les moyens d'extinction mis à la disposition du stagiaire sont des extincteurs C02, poudre et eau.

Les appareils annexes concernés sont une prise de courant (pour débrancher la meule) et un compteur électrique.

Les causes du feu sont liées à la mauvaise utilisation d'une meule portative (sens du meulage incorrect), entraînant la diffusion d'un flux d'étincelles vers un tas de chiffon gras présent dans le local. Par suite du dégagement de fumée et de l'inflammation des chiffons, l'opérateur surpris pose sa meule sans l'arrêter.

Les interventions correctes sont tout d'abord l'arrêt de la meule, en débranchant la prise ou en coupant le compteur, puis la mise en oeuvre de l'extincteur à eau, qui est le type d'appareil approprié en la circonstance. En effet, le C02, inefficace sur les braises, provoque une extinction provisoire suivie d'une reprise du feu. La poudre provoque la dispersion du tas de chiffon en générant un gros nuage.

Ce scénario peut être décomposé en un ensemble de sous séquences, ou clips, reproduits dans le tableau ci-après :

| | |
|---|---|
| La cause | L'ouvrier arrive à son poste, utilise la meule, les chiffons prennent feu, l'ouvrier quitte alors sont poste rapidement sans débrancher la meule |
| La combustion | La meule tourne |
| | Les chiffons brûlent |
| | La flamme grandit |
| Coupure de l'alimentation de la meule | La meule s'arrête |
| Intervention eau | Extinction |
| Intervention CO2 | Inefficace sur les braises |
| | Reprise de feu |
| Intervention poudre | Dispersion du tas de chiffon, gros nuage |

Une fois ce document, qu'on pourrait appeler "story board général", élaboré, une description plus détaillée reprend chaque clip, et précise certains aspects techniques comme l'angle de vue, les éclairages, les matériels nécessaires, en vue de la préparation du tournage.

La figure 4 représente le synoptique d'enchaînement des clips. Les rectangles sont des clips. Le passage d'un clip à un autre est déclenché par un événement. Le synoptique d'enchaînement permet de préparer les différentes scènes à tourner.

Ces scènes sont tournées dans un studio reconstituant un atelier de maintenance, où sont allumés des feux réels, correspondant aux clips.

Après dereushage analogique, compression, description des attributs vidéo et commandes sensorielles, tests et réglages de l'évolution de la vidéo, les images retenues sont stockées dans la base de données multimédia du système.

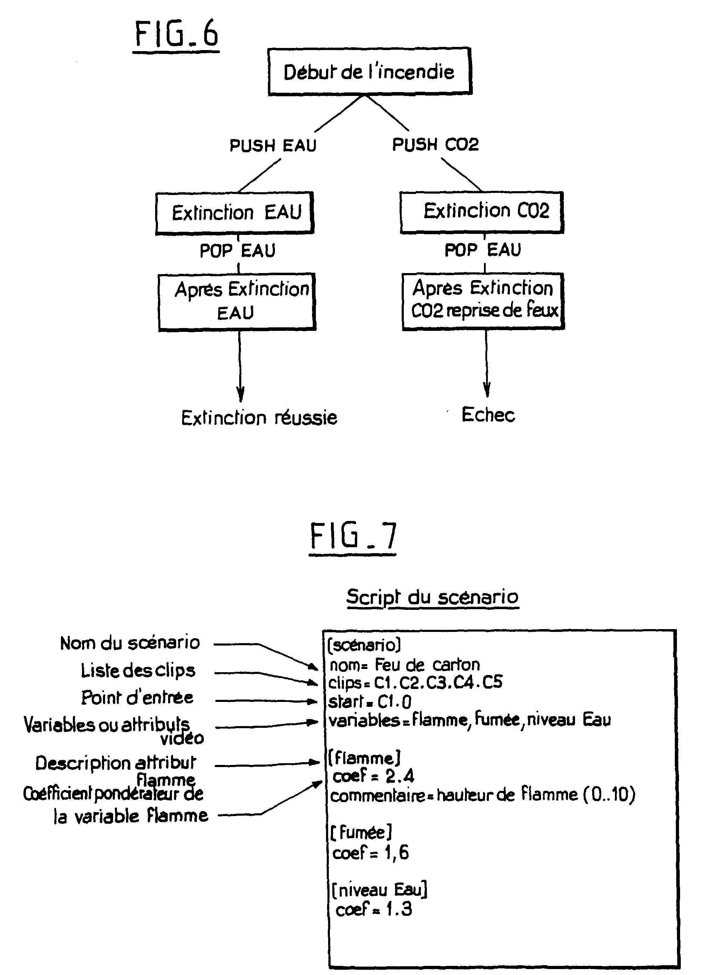

La figure 6 est un synoptique d'enchaînement des clips d'un scénario qui se rapporte à un feu dans un empilement de cartons à l'intérieur d'un bureau.

Deux extincteurs (eau et CO2) sont présents à proximité. L'agent d'extinction adapté est l'eau. L'utilisation du CO2 mène à une reprise des flammes.

Les différents cheminements possibles du scénario sont schématisés par le synoptique.

Un tel scénario est décomposable en cinq clips, figurant sur le tableau ci-après.

| **NOMS** | **Evénements déclencheurs** | **Description** Début d'incendie |
|---|---|---|
| Point d'entrée du scénario | Les cartons brûlent, le feu grandit | Extinction eau |
| PUSH EAU | Les flammes disparaissent | Après extinction eau |
| POP EAU | Le feu s'éteint, les cartons sont trempés | Extinction CO2 |
| PUSH CO2 | Les flammes disparaissent, mais des braises restent présentes | Après extinction CO2 Reprise du feu |
| | Les braises s'enflamment ; il y a reprise du feu | |

Le script de ce scénario, en langage informatique, est représenté à la figure 7.

En référence à celui-ci, il convient de faire les observations suivantes :

Les variables d'un scénario sont les éléments qui varient d'un clip à un autre.

La taille des flammes est caractérisée par exemple par la variable flamme.

Flamme = 0 indique que la flamme est nulle. Flamme = 10 est représentatif d'une grande flamme.

Les variables de ce scénario sont la hauteur de flamme, le niveau de fumées et l'étendue d'eau au sol.

Le script du scénario déclare ces variables de description de l'image vidéo, elles pourront alors être affectées dans les scripts des clips.

La zone "start" du script scénario indique le clip et le numéro de frame à jouer au démarrage du scénario.

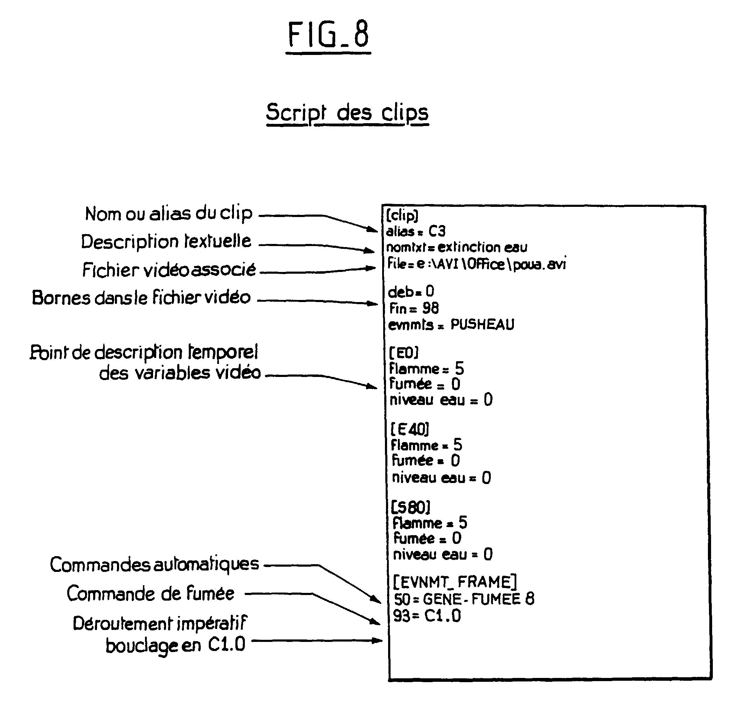

Le script des clips est représenté à la figure 8.

A chaque clip est associé un script, dont les éléments figurent sur le schéma.

La zone "alias" nomme le clip. L'alias sert notamment pour les déroutements automatiques.

C₁0 signifie : "jouer le clip C₁ au numéro de frame 0".

La zone description textuelle sert à alimenter le module de gestion de l'historique.

Les zones "file, deb, fin" associent le clip à un fichier de vidéo numérique.

Le clip C₁ correspond à la zone [0..98] n° de frame dans le fichier vidéo numérique e: / AVI / Office / poua.avi.

Il faut noter que plusieurs clips peuvent faire référence à un même fichier numérique.

La zone [E0] est un point de description temporel de la scène correspondant au n° de frame 0 de ce clip. Les variantes vidéo sont affectées. Le simulateur a la connaissance de l'état de la scène vidéo en ce point.

Le système de décision de déroutement d'une scène à une autre va se servir de ces points de description pour choisir une scène vidéo adaptée.

La zone [EVNMT_FRAME] décrit des commandes à exécuter aux n° de frame mentionnés.

Au point vidéo C₂.50 une commande de fumée niveau 8 sera exécutée.

Au point vidéo 93 un déroulement vers le point vidéo C₁.0 sera exécuté.

Ces commandes permettent d'allumer des projecteurs, de déclencher une alarme, de diffuser des odeurs ou de dérouter une séquence vers une autre.

La zone [evnmt] décrit l'ensemble des événements potentiellement déclencheurs d'un déroutement vers le clip C₃.

Le clip C₃ acceptera d'être joué suite à un événement PUSHEAU : l'utilisateur actionne l'extincteur EAU.

Le script d'un scénario déclare les faits temporels que sont les points de description de la vidéo. Exemple : C₃ déclare qu'au point correspondant au n° de frame 40 la flamme = 5 la fumée = 0 et l'eau = 3.

Le script d'un scénario est également un fichier de commandes temporel.

Exemple : au point vidéo C₂.50 une commande de fumée niveau 8 sera exécutée.

## Revendications

1. Installation pédagogique pour l'apprentissage et l'entraînement à l'utilisation de moyens d'intervention contre un incendie, qui comprend :
- un écran (1) devant lequel doit se placer la personne (P) accomplissant l'exercice ;
- des moyens pour afficher sur cet écran (1) des images évolutives représentatives d'un incendie suivant un séquencement piloté par un ordinateur (9) ;
- au moins un appareil d'extinction modifié (4), incapable de propulser un agent extincteur, mais équipé de moyens générateurs d'un signal représentatif de la direction de son jet virtuel ;
- des moyens de localisation de la zone virtuelle d'impact de l'appareil (4) sur l'écran (1), adaptés pour transmettre à l'ordinateur (9) une information correspondante, afin de faire évoluer en conséquence les images affichées ;
caractérisée par le fait que :
a) ledit écran (1) est de grande dimension, les images affichées sur celui-ci étant à la même échelle, ou sensiblement à la même échelle, que les scènes réelles de l'incendie qu'elles représentent ;
b) l'installation comporte :
- au moins un appareil annexe (8) représentatif d'un moyen dit influent, susceptible d'être amené dans au moins deux états différents, et dont le changement d'état peut avoir une influence sur l'évolution de l'incendie, cet appareil annexe étant adapté pour être actionné aussi par la personne (P) accomplissant l'exercice, des moyens de repérage de l'état dudit appareil annexe étant prévus qui sont adaptés pour transmettre à l'ordinateur (9) une information correspondante, afin, le cas échéant, de faire évoluer en conséquence les images affichées ;
- plusieurs appareils d'extinction modifiés (4A, 4B, 4C, 4D) de type différent, susceptibles d'être prélevés sélectivement par la personne (P), des contacteurs associés à chacun desdits appareils étant adaptés pour fournir à l'ordinateur (9) des informations sur l'identité et sur l'état de l'appareil prélevé.

2. Installation selon la revendication 1, caracténsée par le fait qu'elle comporte un vidéoprojecteur (2), piloté par l'ordinateur (9), et projetant les images sur l'écran (1).

3. Installation selon la revendication 2, caracténsée par le fait que la surface d'écran (11) est translucide, ledit vidéoprojecteur étant placé demère l'écran, et travaillant en projection inverse.

4. Installation selon l'une des revendications 1 à 3, caractérisée par le fait que la localisation de la zone d'impact est réalisée par un système de détection électromagnétique, l'appareil d'extinction modifié (4) étant équipé de cellules émettrices disposées dans l'axe de visée de l'appareil, tandis que des capteurs de champ magnétique fixes sont répartis dans la zone d'exercice, ce système détectant également la distance et l'angle d'attaque de l'appareil d'extinction (4) par rapport à l'écran.

5. Installation selon l'une des revendications 1 à 3, caractérisée par le fait que la localisation de la zone d'impact est réalisée au moyen d'un Faisceau lumineux (50), par exemple infrarouge, émis par un pointeur laser (5) équipant l'appareil d'extinction modifié (4), et d'un capteur optique (3) apte à localiser la zone d'impact (100') du faisceau (50) sur la surface d'écran (11).

6. Installation selon la revendication 5, caractérisée par le fait que ledit pointeur laser (5) émet un rayon intermittent, sous forme d'impulsions, le capteur optique (3) étant adapté pour analyser la durée desdites impulsions, et transmettre à l'ordinateur (8) une information correspondante.

7. Installation selon l'une des revendications 1 à 6, caractérisée par le fait que ledit appareil annexe (8) est représentatif d'un moyen influent choisi parmi les dispositifs suivants :
- une alarme,
- un brise-glace,
- un téléphone,
- un tableau électnque,
- un compteur gaz,
- une manette de coupure d'oxygène,
- une manette d'arrêt de machine,
- une prise de courant,
- une commande de gaz d'extincteur,
- un tiré-lâché.

8. Installation selon l'une des revendications 1 à 7, caractérisée par le fait qu'elle comporte des moyens générateurs de flash lumineux, de sons, de fumées froides et/ou d'odeurs, pilotés ou non par l'ordinateur (8).

## Patentansprüche

1. Lehranlage zum Erlernen und Üben des Gebrauchs von Feuerlöschanlagen, welche aufweist:
- einen Bildschirm (1), vor welchem sich die Person (P), welche die Übung durchführt, anordnen soll;
- Vorrichtungen, um auf diesem Bildschirm (1) fortschreitende, einen Brand darstellende Bilder gemäß einer von einem Computer (9) ferngesteuerten Abfolge zu zeigen;
- wenigstens ein modifiziertes Feuerlöschgerät (4), welches zwar nicht in der Lage ist, ein Feuerlöschmittel zu spritzen, aber mit Vorrichtungen zur Erzeugung eines Signals ausgestattet ist, welches repräsentativ für die Richtung seines virtuellen Strahls ist;
- Vorrichtungen zur Lokalisierung des virtuellen Auftreffbereiches des Gerätes (4) auf dem Bildschirm (1), welche dafür eingerichtet sind, dem Computer (9) eine entsprechende Information zu übermitteln, um daraufhin die gezeigten Bilder sich weiterentwickeln zu lassen;
dadurch gekennzeichnet, daß
a) der Bildschirm (1) von großer Abmessung ist, wobei die auf diesem gezeigten Bilder denselben Maßstab oder praktisch denselben Maßstab aufweisen wie die realen Szenen des Brandes, den sie darstellen;
b) die Anlage aufweist:
- wenigstens ein Zusatzgerät (8), welches repräsentativ für eine sogenannte einflußnehmende Vorrichtung ist, welche dazu geeignet ist, in wenigstens zwei verschiedene Zustände versetzt zu werden, und deren Zustandswechsel einen Einfluß auf die Weiterentwicklung des Brandes haben kann, wobei dieses Zusatzgerät dafür eingerichtet ist, auch von der die Übung durchführenden Person (P) betätigt zu werden, wobei Vorrichtungen zur Feststellung des Zustandes des Zusatzgerätes vorgesehen sind, welche dafür eingerichtet sind, dem Computer (9) eine entsprechende Information zu übermitteln, um gegebenenfalls daraufhin die gezeigten Bilder sich weiterentwickeln zu lassen;
- mehrere modifizierte Feuerlöschgeräte (4A, 4B, 4C, 4D) von unterschiedlicher Art, welche von der Person (P) selektiv ausgewählt werden können, wobei Impulsgeber, welche jedem der Geräte zugeordnet sind, dafür eingerichtet sind, dem Computer (9) Informationen über die Identität und den Zustand des ausgewählten Gerätes zu übermitteln.

2. Anlage gemäß Anspruch 1, dadurch gekennzeichnet, daß sie einen von dem Computer (9) ferngesteuerten Videoprojektor aufweist, welcher die Bilder auf den Bildschirm (1) projiziert.

3. Anlage gemäß Anspruch 2, dadurch gekennzeichnet, daß die Bildschirmfläche (11) durchscheinend ist, wobei der Videoprojektor hinter dem Bildschirm angeordnet ist und mit umgekehrter Projektion arbeitet.

4. Anlage gemäß einem der Ansprüche 1 bis 3, dadurch gekennzeichnet, daß die Lokalisierung des Auftreffbereiches von einem elektromagnetischen Erfassungssystem durchgeführt wird, wobei das modifizierte Feuerlöschgerät (4) mit Sendezellen ausgestattet ist, welche in der Visierachse des Gerätes angeordnet sind, während die festen Magnetfeldsensoren in dem Übungsbereich verteilt sind, wobei dieses System auch den Angriffsabstand und -winkel des Feuerlöschgerätes (4) bezüglich des Bildschrims erfaßt.

5. Anlage gemäß einem der Ansprüche 1 bis 3, dadurch gekennzeichnet, daß die Lokalisierung des Auftreffbereiches mittels eines Strahlenbündels (50), welches z.B. infrarot ist, und welches von einem Laserverfolger (5), mit welchem das modifizierte Feuerlöschgerät ausgestattet ist, ausgesandt wird, und mittels eines optischen Sensors (3) durchgeführt wird, welcher dafür eingerichtet ist, den Auftreffbereich (100') des Strahlenbündels (50) auf der Bildschirmfläche (11) zu lokalisieren.

6. Anlage gemäß Anspruch 5, dadurch gekennzeichnet, daß der Laserverfolger (5) einen intermittierenden Strahl in Form von Impulsen aussendet, wobei der optische Sensor (3) dafür eingerichtet ist, die Dauer der Impulse zu analysieren und dem Computer (9) eine entsprechende Information zu übermitteln.

7. Anlage gemäß einem der Ansprüche 1 bis 6, dadurch gekennzeichnet, daß das Zusatzgerät (8) repräsentativ für eine einflußnehmende Vorrichtung ist, welche aus den folgenden Vorichtungen gewählt ist:
- ein Alarm
- ein Glasbrecher
- ein Telefon
- eine elektrische Schalttafel
- ein Gaszähler
- ein Sauerstoffunterbrechungshebel
- ein Maschinenanhalthebel
- eine Steckdose
- eine Feuerlöschgassteuerung
- ein Steuerhebel zur Öffnung einer Rauchabzugsklappe

8. Anlage gemäß einem der Ansprüche 1 bis 7, dadurch gekennzeichnet, daß sie Vorrichtungen zur Erzeugung von Lichtblitzen, Tönen, kaltem Rauch und/oder Gerüchen aufweist, welche von dem Computer (9) ferngesteuert oder nicht ferngesteuert werden.

## Claims

1. A teaching installation for training and practice in the use of fire-fighting equipment, the installation comprising:
^{·} a screen (1) in front of which the person (P) performing the exercise is to be located;
^{·} means for displaying on the screen (1) varying images that represent a fire in a sequence that is driven by a computer (9);
^{·} at least one modified fire extinguisher device (4) that is incapable of propelling a fire-extinguishing agent, but that is fitted with means for generating a signal representing the direction of its virtual jet; and
^{·} means for locating the virtual zone of impact of the device (4) on the screen (1), and adapted to transmit corresponding information to the computer (9) so as to cause the displayed images to vary accordingly;
the installation being characterized by the fact that:
a) said screen (1) is of large dimensions, such that the images displayed thereon are at the same scale or at substantially the same scale as real fire scenes they represent; and
b) the installation includes:
^{·} at least one associated device (8) representing "influential" means that can be put into at least two different states, and for which a change of state can have an influence on the progress of the fire, said associated device also being adapted to be actuated by the person (P) performing the exercise, means for detecting the state of said associated device being provided and adapted to transmit corresponding information to the computer (9) so as to cause the displayed images to vary accordingly, where appropriate; and
^{·} a plurality of modified fire extinguisher devices (4A, 4B, 4C, 4D) of different types, suitable for being taken selectively by the person (P), contactors associated with each of said devices being adapted to supply the computer (9) with information concerning the identity and the state of the device that has been taken.

2. An installation according to claim 1, characterized by the fact that it includes a video projector (2) driven by the computer (9) and projecting images on the screen (1).

3. An installation according to claim 2, characterized by the fact that the surface of the screen (11) is translucent, said video projector being placed behind the screen, and operating by back projection.

4. An installation according to any one of claims 1 to 3, characterized by the fact that the impact zone is located by an electromagnetic detection system, the modified fire extinguisher device (4) being fitted with emitting cells located on the aiming axis of the device, while fixed magnetic field sensors are distributed in the exercise zone, said system detecting both the distance and the angle of attack of the fire extinguisher device (4) relative to the screen.

5. An installation according to any one of claims 1 to 3, characterized by the fact that the impact zone is located by means of a light beam (50), e.g. an infrared beam, emitted by a laser pointer (5) fitted to the modified fire extinguisher device (4), and by means of an optical sensor (3) suitable for locating the impact zone (100') of the beam (50) on the surface of the screen (11).

6. An installation according to claim 5, characterized by the fact that said laser pointer (5) emits an intermittent beam, in the form of pulses, the optical sensor (3) being adapted to analyze the duration of said pulses, and to transmit corresponding information to the computer (8).

7. An installation according to any one of claims 1 to 6, characterized by the fact that said associated device (8) represents "influential" means selected from the following:
^{·} an alarm;
^{·} a glass breaker;
^{·} a telephone;
^{·} an electrical control panel;
^{·} a gas meter;
^{·} an oxygen cutoff handle;
^{·} a machine switchoff handle;
^{·} an electricity outlet;
^{·} an extinguishing gas control;
^{·} a trapdoor-pull device.

8. An installation according to any one of claims 1 to 7, characterized by the fact that it includes means for generating flashes of light, sounds, cold smoke, and/or odors optionally under the control of the computer (8).
